# EUROPEAN PATENT SPECIFICATION

(11) **EP 2 098 382 B1**
(45) Date of publication and mention of the grant of the patent: **18.05.2011**
(21) Application number: 08004307.8
(22) Date of filing: 07.03.2008
(51) Int. Cl.: B60B 1/00, B60B 5/02, B60B 21/02

(54) **Motor bicycle rim and method of making the same**
Motorradfelge und Verfahren zu ihrer Herstellung
Jante de bicyclette à moteur et son procédé de fabrication

(43) Date of publication of application: 09.09.2009
(73) Proprietor: Kunshan Henry Metal Technology Co., Ltd., 215300 Kunshan Jiangsu (CN)
(72) Inventor: Fioravanti, Moreno, 40024 Castel San Pietro Terme (BO) (IT); Tho, Kee Ping, 215300 Kunshan Jiangsu (CN)
(74) Representative: Kirschner, Klaus Dieter

(56) References cited:
- DE-A1-102006 010 445
- GB-A- 2 165 498
- JP-A- 60 080 902
- JP-A- 61 071 201
- US-A- 4 995 675
- US-A- 5 246 275

## Description

The invention relates to a motor bicycle rim, and a method of making such a motor bicycle rim.

Historically, motor bicycle rims have been made of metal. While steel is still used, rims can also be made from aluminum alloys or titanium. Several properties of a material help decide whether it is an appropriate material for the construction of a motor bicycle rim. The density or specific gravity of the material is a measure of how light or heavy the material volume is adding to the total weight of the wheel. Stiffness or elastic modulus affect the performance of the wheel. The yield strength determines how much force is needed to permanently deform the material, and this characteristic is important for crash-worthiness. The elongation characteristic determines how much deformity the material allows before cracking which is also important for crash-worthiness. The fatigue limit and endurance limit determines the durability of the rim when subjected to from rotation or street bumps. Such characteristic are to be optimized.

As concerns the wheels for motor bicycles, it is important that the wheels are light weight because the wheels have to be accelerated each time the cyclist desires to speed up, and this takes up the more fuel the more heavy the wheels are. Therefore, in the case of motor bicycle wheels, the weight of the wheel is not only a concern as relates to moving a particular mass, but it is also a concern in view of the fuel usage and the CO₂ exhaust gases associated with such acceleration of the motor bicycle. Therefore, reducing weight not only enables a better acceleration of the motor because of less weight, but also reduces the environmental influence by the motor bicycle. Since the rim of the bicycle wheel contributes a major portion of the weight of the total wheel, reducing the weight of the rim advantageously contributes to improve performance and reduce environmental problems associated with motor cycles.

As concerns aluminum alloys, they have lower density and lower strength compared with steel alloys. Aluminum alloys can, however, be used to build a rim that is lighter than steel. Furthermore, aluminum alloy has no substantial fatigue endurance limit; even the smallest repeated stresses will eventually cause failure if repeated enough times. However, alloy technology, good mechanical design and good construction practices help to extend the fatigue life of motor bicycle rims out of aluminum alloy to acceptable lengths. Other attempts to improve the properties of aluminum alloy motor bicycle rims include the shaping of the cross section of the rims for optimizing stiffness.

US-A-5,246,275 discloses a lightweight, high strength wheel having good aerodynamics both head-on and laterally. The head-on aerodynamics of the wheel is as good or better than disk wheels of same size and weight while having adequate lateral, radial and torsional stiffness. There is also provided by this invention a method of producing a lightweight, high strength composite wheel. In one embodiment of this invention the composite structure comprises high strength fibers such as aromatic polyamide or carbon fibers or the like. In another embodiment the composite structure is hollow to reduce the weight of the wheel.

JP 60 080902 A has the objective to obtain a lightweight rim having high strength in a rim used in the wheel of a bicycle, etc., by arranging a unidirectionally reinforced plastic layer onto the inside peripheral surface of a metal core and integrally coating these core and layer by a reinforced plastic layer. For this purpose, a unidirectionally reinforced layer which is formed by arranging reinforced fibers in the circumferential direction is arranged onto the inside peripheral surface of an annular core member made of the metal such as aluminium alloy. Then, the core member and reinforced layer are integrally coated with a bias-reinforced plastic layer which is formed by compounding and sticking fibers at an angle of + or -45 deg.. In this case, surface treatment is carried-out by applying inorganic paint coating, etc. at least onto a part of the surface of the reinforced plastic layer, Thus, a lightweight rim which can develop the sufficient strength and durability even in the use under severe condition can be obtained.

It is apparent from the above, that extensive research and development efforts have been made in order to provide a motor bicycle rim which is, on the one hand, light weight and, on the other hand, has the desired mechanical properties mentioned above.

For the above purpose, the motor bicyle rim of the invention has the features of claim1. The motor bicycle rim according to the invention comprising a basic rim structure out of aluminum alloy which basic rim structure is covered at least in part by a glass fiber and carbon fiber reinforced resin layer adapted to the use of an adhesive material designed to bond the reinforced prepreg material to the basic rim structure of aluminum alloy. Thanks to the combination of the glass fiber reinforcement and the carbon fiber reinforcement of the invention, the rigidity of the rim can still be increased by 50%, and its resistance against shocks and breaking is increased by at least 100%. Furthermore, the combination of the glass fiber reinforcement and the carbon fiber reinforcement can better take up the quite substantial vibrations in the rim which vibrations are encountered at elevated driving speeds of the motor bicycle.

According to a preferred embodiment of the invention, the glass fiber and carbon fiber reinforced resin layer covers basic rim structure out of aluminum alloy on a radially inner surface of the rim and on aside surfaces of the rim. More preferably, the glass fiber and carbon fiber reinforced resin layer covers basic rim structure out of aluminum alloy additionally on inner surfaces of flange portions of the rim. This has the effect that the beads of the tire are sitting directly on aluminum which provides a better performance as to air-tightness of a tubeless wheel when the tire is mounted. Furthermore, the nipples for the wire spokes can sit on an aluminum surface so that the nipples may also be sealed of more slightly.

According to a preferred embodiment of the invention, the aluminum alloy comprises a 6061 or 7005 aluminum alloy. Among the numerous aluminum alloys on the market, it has been found that these aluminum alloys 6061 or 7005 are in particularly suited for the basic rim structure according to the invention because they show the required mechanical characteristics and lend themselves to a good adhesion of the resin layer to the aluminum alloy tubes.

According to a preferred embodiment of the invention, the glass fibers comprise weights (counts) of 200 to 800 tex. Among the numerous glass fibers which can be used as reinforcements of a reinforced resin layer, glass fibers in this tex-range are particularly suited as they show, on the one hand, the desired reinforcement properties and, on the other hand, are easily applied to the structural components of the motor bicycle rim.

According to a preferred embodiment of the invention, the glass fiber reinforcement comprises woven glass fiber fabric. The woven fabric version of the glass fiber reinforcement adds additional stability during the manufacturing of the motor bicycle rim and also during later use.

According to a preferred embodiment of the invention, the carbon fibers comprise one of 3K and 6K and 9K and 12K carbon fibers. This range of carbon fibers has been proven to result in the desired mechanical and operation characteristics, and they are also easily to integrate into the manufacturing process.

According to a preferred embodiment of the invention, the carbon fiber reinforcement comprises woven carbon fiber fabric. As with the glass fiber reinforcement, also the woven fabric version of carbon fibers adds to the mechanical strength and easiness of manufacture.

According to a preferred embodiment of the invention, the resin layer is comprises an epoxy resin, preferably having a cure temperature of 125°C to 180°C, preferably 150°C. Also epoxy resins with different cure temperatures may be used, this kind of epoxy resin is preferred in view of energy saving and smoothness of the manufacturing process. In particular the low cure temperature ensures a curing process that does not produce any cracks and effects.

According to a preferred embodiment of the invention, the finished rim is covered by a lacquer layer for protecting the prepreg material and for decorative purposes.

According to the invention, a method of producing a motor bicycle rim comprises the features of claim 11.

The advantageous aspect of the production method is the fact that the reinforcement material can be fixed to the basic rim structure out of aluminum alloy to form a semi fabricated product which has an improved the stability of the bond between the aluminum alloy and the reinforced carbon material and which can easily be cured.

According to a preferred embodiment of the method of the invention, the fixing of the glass fiber and carbon fiber reinforcement material to the basic rim structure comprises using an adhesive material designed to bond fibrous material to the basic rim structure of aluminum alloy.

Adhesive materials designed to bond the reinforced prepreg material to the basic rim structure of aluminum alloy are on the market from various manufactures, among others Minnesota Mining and Manufacturing Company, St. Paul, Minnesota, United States. The use of such adhesive materials substantially improves the stability of the bond between the aluminum alloy and the reinforced carbon material.

According to a preferred embodiment of the method of the invention, the curing is carried out in a moulding tool or in an autoclave. The moulding tool which applies the required heat energy to the semi product motor bicycle rim to be cured may be in one peace or may be applied successively to sections of the semi product motor bicycle rim to be cured. It is easy to provide tool at low cost. On the other hand, an autoclave has the advantage that the curing procedure can be shortened.

According to a preferred embodiment of the method of the invention, the curing is carried out at 125 °C to 180°C, preferably at 150°C for 30 min. It has been found that such a gentle curing of the motor bicycle rim is advantages in view of avoiding cracks and defects.

According to a preferred embodiment of the invention, the method further comprises trimming and polishing the motor bicycle rim after removal from the moulding tool or the autoclave. Trimming and polishing of the final motor bicycle rim adds to the appearance and also to safety during use as there are no edges or cracks which could cause injuries to the drivers.

According to a preferred embodiment of the method of the invention, the finished rim is covered by a lacquer layer which is curable at 60°C.

Embodiments of the invention are now described with reference to the drawings in which:
Fig. 1 shows a perspective view of a motor bicycle rim of the invention;
Fig. 2 shows a plane view of a motor bicycle rim of the invention; and
Fig. 3 shows a section of the rim of Fig. 1.

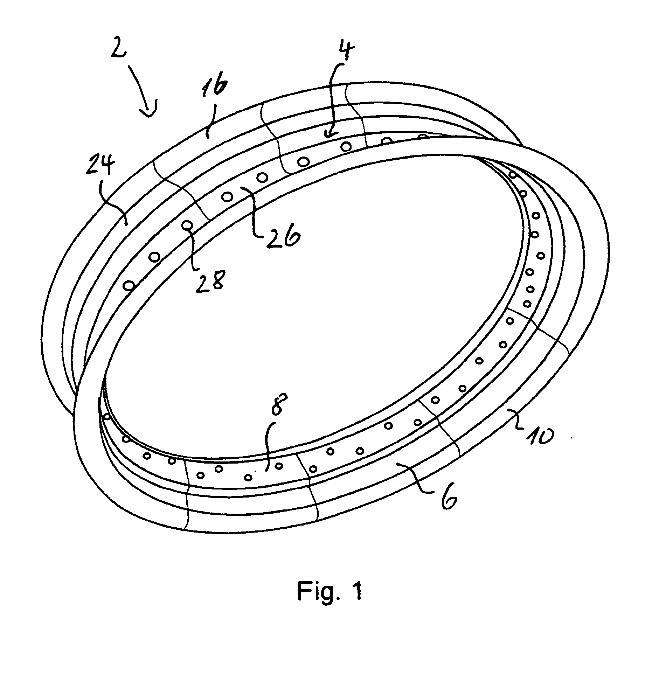

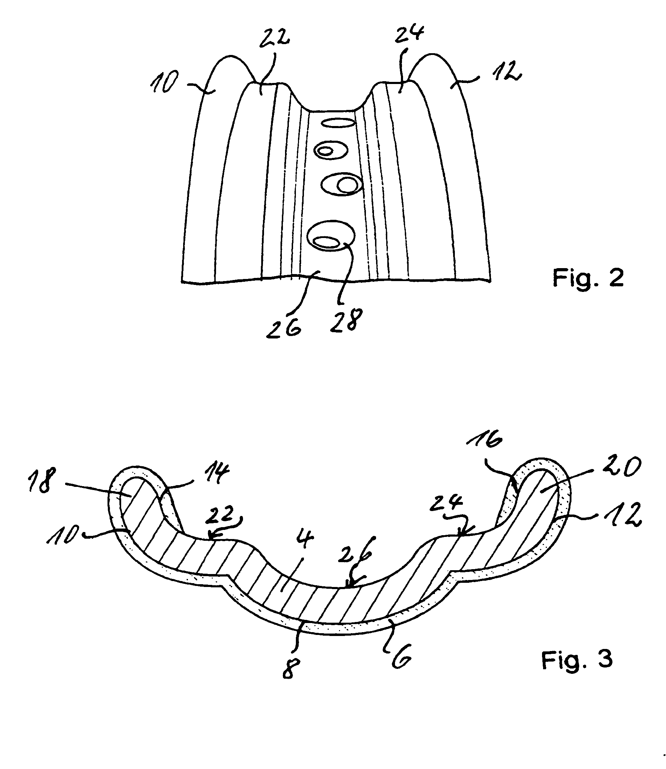

Figs. 1 to 3 show the general outline of a motor bicycle rim 2. The motor bicycle rim 2 consists of an aluminum profile 4 which is coated by a fiber reinforced resin layer 6which covers a radially inner surface 8 of the rim 2, side surfaces 10, 12 of the rim 2 and inner sides 14, 16 of flanges 18, 20 of the rim 2. The fiber reinforced resin layer 6 comprises a reinforcement of glass fibers and carbon fibers, where the combination of glass fibers and carbon fibers is advantageous in view of stability and vibration resistance of the system consisting of the aluminum profile 4 and the reinforcement layer 6. The aluminum profile 4 of the rim 2 has seats 22, 24 for the inner beads of a tire (not shown), and a base portion 26 in between the seat portions 22, 24. The base portion 26 comprises holes 28 (see Figs. 1 and 2) which are provided for inserting the nipples for wire spokes.

As can be seen from Figs. 1 and 2, the seat portion 22, 24 and the bottom portion 26 are not covered by a carbon layer at the side of the rim adjacent the tire (not shown). This has the effect that the beads of the tire are sitting directly on aluminum which provides a better performance as to air-tightness of the wheel when the tire is mounted. Furthermore, the nipples (not shown) for the wire spokes can sit on an aluminum surface which is also preferred over a seat on a non-metal material which means that the holes 28 for the nipples may also be sealed of more slightly.

It should be understood that the invention is not restricted to the shape of the rim 2 as shown in the figures, but that the invention may also be applied to so-called chamber rims which contain air chambers in a circumferential direction within the metal part of the rim in order to further reduce the weight of the rim.

In preferred embodiments of the invention, aluminum alloys 6061 consisting or 7005 according to DIN EN 573.3. Furthermore, glass fibers comprising weights of 200 to 800 tex, carbon fibers in the range of 3K, 6K, 9K and 12K, and the epoxy resin having a curing temperature of 125°C to 180°C, preferably 150°C, are used in preferred embodiments of the invention. In the most preferred embodiment, the glass fiber reinforcement or carbon fiber enforcement layer is in the form of a woven fabric out of the fibers mentioned.

In order to produce the motor bicycle rim according to the invention, glass fiber and carbon fiber reinforcement material is fixed to the basic rim structure out of aluminum alloy. To this end, an adhesive material designed to bond fibrous material to the basic rim structure of aluminum alloy is used. After fixing the glass fiber and carbon fiber reinforcement material to the basic rim structure, a prepreg resin is provided to the thus prepared semi product basic rim structure having glass fiber and carbon fiber reinforcement material fixed thereto, and, thereafter, the prepreg resin together with the glass fiber and carbon fiber reinforcement is cured.

In order to produce the motor bicycle rim in an alternative method of the invention, glass fiber and carbon fiber reinforced prepreg material is fixed to the basic rim structure out of aluminum alloy. To this end, an adhesive material designed to bond the prepreg material to the basic rim structure of aluminum alloy is used. After fixing the prepreg material to the basic rim structure, the thus prepared semi product basic rim structure having prepreg material fixed thereto is cured.

In both methods the curing is carried out in a moulding tool or in an autoclave, wherein the curing is carried out at 125°C to 180°C, preferably 150°C, for 30 min. After curing and removal from the moulding tool or the autoclave, the motor bicycle rim is trimmed and polished.

## Claims

1. Motor bicycle rim (2) comprising a basic rim structure (4) out of aluminum alloy which basic rim structure is covered at least in part by a fiber reinforced resin layer (6) adapted to the use of an adhesive material designed to bond the reinforced prepreg material to the basic rim structure of aluminum alloy,
**characterized in that**
the reinforcement of the fiber reinforced resin layer (6) comprises glass fibers as well as carbon fibers

2. The motor bicycle rim of claim 1, wherein the glass fiber and carbon fiber reinforced resin layer (6) covers basic rim structure (4) out of aluminum alloy on a radially inner surface of the rim and on side surfaces of the rim.

3. The motor bicycle rim of claim 1, wherein the glass fiber and carbon fiber reinforced resin layer (6) covers the basic rim structure (4) out of aluminum alloy additionally on inner surfaces of flange portions of the rim.

4. The motor bicycle rim of claim 1, wherein the aluminum alloy comprises an 6061 or 7005 aluminum alloy.

5. The motor bicycle rim of claim 1, wherein the glass fibers comprise weights (counts) of 200 to 800 tex.

6. The motor bicycle rim of claim 5, wherein the glass fiber reinforcement comprises woven glass fiber fabric.

7. The motor bicycle rim of claim 1, wherein the carbon fibers comprise one of 3K and 6K and 9K and 12K carbon fibers.

8. The motor bicycle rim of claim 5, wherein the carbon fiber reinforcement comprises woven carbon fiber fabric.

9. The motor bicycle rim of claim 1, wherein the fiber reinforced resin layer (6) comprises an epoxy resin, preferably having a cure temperature of 125°C to 180°C, preferably 150°C.

10. The motor bicycle rim of claim 1, wherein the finished rim is covered by a lacquer layer.

11. A method of producing the motor bicycle rim (2) of claim 1, comprising:
fixing glass fiber and carbon fiber reinforcement material to the basic rim structure (4) out of aluminum alloy,
providing a prepreg resin to the basic rim structure (4) having glass fiber as well as carbon fiber reinforcement material fixed thereto; and curing the prepreg resin together with the glass fiber or carbon fiber reinforcement, and
using an adhesive material designed to bond the reinforced prepreg material to the basic rim structure (4) of aluminum alloy.

12. The method of claim 11, wherein the glass fiber and carbon fiber reinforced prepreg is fixed to the basic rim structure by means of the adhesive material designed to bond the reinforced prepreg material to the basic rim structure (4) of aluminum alloy.

13. The method of any of the claims 11 and 12, wherein the curing is carried out in a moulding tool or in an autoclave.

14. The method of any of the claims 11 to 13, wherein the curing is carried out at 125°C to 180°C, preferably 150°C, for 30 min.

15. The method of claim 13, further comprising trimming and polishing the motor bicycle rim after removal from the moulding tool or the autoclave.

16. The method of claim 13, wherein the finished rim is covered by a lacquer layer which is curable at 60°C.

## Patentansprüche

1. Motorradfelge (2) umfassend eine Basis-Felgenstruktur (4) aus Aluminiumlegierung, wobei die Basis-Felgenstruktur wenigstens teilweise mit einer Faser verstärkten Kunststoffschicht (6) überdeckt ist, die auf die Verwendung eines Klebestoffmaterials angepasst ist, die ausgelegt ist, um das verstärkte Prepreg-Material an der Basis-Felgenstruktur aus Aluminiumlegierung zu befestigen,
**dadurch gekennzeichnet, dass**
die Verstärkung der Faserverstärkten Kunststoffschicht (6) Glasfasern und auch Carbonfasern umfasst.

2. Motorradfelge nach Anspruch 1, worin die mit Glasfasern und Carbonfasern verstärkte Kunststoffschicht (6) die Basis-Felgenstruktur (4) aus Aluminiumlegierung auf einer radial innenliegenden Oberfläche der Felge und auf Seitenflächen der Felge überdeckt.

3. Motorradfelge nach Anspruch 1, worin die mit Glasfasern und Carbonfasern verstärkte Kunststoffschicht (6) die Basis-Felgenstruktur (4) aus Aluminiumlegierung zusätzlich auf den inneren Oberflächen von Flanschabschnitten der Felge überdeckt.

4. Motorradfelge nach Anspruch 1, worin die Aluminiumlegierung eine 6061 oder 7005 Aluminiumlegierung aufweist.

5. Motorradfelge nach Anspruch 1, worin die Glasfasern Gewichts(-zahlen) von 200 bis 800 tex aufweisen.

6. Motorradfelge nach Anspruch 5, worin die Glasfaserverstärkung einen gewebten Glasfaserstoff aufweist.

7. Motorradfelge nach Anspruch 1, worin die Carbonfasern eine aus 3K und 6K und 9K und 12K Carbonfasern aufweisen.

8. Motorradfelge nach Anspruch 5, worin die Carbonfaserverstärkung einen gewebten Carbonfaserstoff umfasst.

9. Motorradfelge nach Anspruch 1, worin die Faserverstärkte Kunststoffschicht (6) eine Epoxyschicht aufweist, die vorzugsweise eine Aushärtungstemperatur von 125 °C bis 180 °C, vorzugsweise 150 °C, aufweist.

10. Motorradfelge nach Anspruch 1, worin die fertige Felge mit einer Lackschicht beschichtet ist.

11. Verfahren zur Herstellung der Motorradfelge (2) nach Anspruch 1, umfassend:
Befestigen von Glasfaser- und Carbonfaserverstärktem Material an einer Basis-Felgenstruktur (4) aus Aluminiumlegierung,
Anbringen eines Prepreg-Harzes an der Basis-Felgenstruktur (4), an der ein Glasfaser und auch Carbonfaser verstärktes Material befestigt ist; und
Aushärten des Prepreg-Harzes zusammen mit der Glasfaser- oder Carbonfaserverstärkung, und
Verwenden eines Klebstoffmaterials, das ausgelegt ist, um das verstärkte Prepreg-Material an der Basis-Felgenstruktur (4) aus Aluminiumlegierung zu befestigen.

12. Verfahren nach Anspruch 11, worin das mit Glasfasern und Carbonfasern verstärkte Prepreg-Harz an der Basis-Felgenstruktur mit Hilfe eines Klebematerials befestigt wird, das ausgelegt ist, um das verstärkte Prepreg-Material an der Basis-Felgenstruktur (4) aus Aluminiumlegierung zu befestigen.

13. Verfahren nach einem der Ansprüche 11 und 12, worin das Aushärten in einem Gusswerkzeug oder einem Autoklaven ausgeführt wird.

14. Verfahren nach einem der Ansprüche 11 bis 13, worin das Aushärten bei 125 °C bis 180 °C, vorzugsweise bei 150 °C, für 30 Minuten ausgeführt wird.

15. Verfahren nach Anspruch 13, ferner umfassend das Trimmen und Polieren der Motorradfelge nach Entfernen aus dem Gusswerkzeug oder dem Autoklaven.

16. Verfahren nach Anspruch 13, worin die fertige Felge mit einer Lackschicht überdeckt wird, die bei 60 °C aushärtbar ist.

## Revendications

1. Jante de bicyclette à moteur (2) comprenant une structure de base de jante (4) en dehors de l'alliage d'aluminium laquelle structure de base de jante est couverte au moins en partie par une couche de résine renforcée par fibre (6) adaptée à l'utilisation d'un adhésif désigné pour lier le matériau pré- imprégné renforcé à la structure de base de jante d'alliage d'aluminium
**caractérisée en ce que**
- le renforcement de la couche de résine renforcée par fibre (6) comprend les fibres de verre ainsi que les fibres de carbone.

2. Jante de bicyclette à moteur selon la revendication 1, où la couche de résine renforcée par fibre de verre et fibre de carbone (6) couvre la structure de base de jante (4) en dehors de l'alliage d'aluminium sur une surface radialement intérieure de la jante et sur les surfaces de côté de la jante.

3. Jante de bicyclette à moteur selon la revendication 1, où la couche de résine renforcée par fibre de verre et fibre de carbone (6) couvre la structure de base de jante (4) en dehors de l'alliage d'aluminium et de plus sur les surfaces intérieures des portions de bride de la jante.

4. Jante de bicyclette à moteur selon la revendication 1, où l'alliage d'aluminium comprend un alliage d'aluminium 6061 ou 7005.

5. Jante de bicyclette à moteur selon la revendication 1, où les fibres de verre comprennent poids (valeurs) de 200 à 800 tex.

6. Jante de bicyclette à moteur selon la revendication 5, où le renforcement de fibre de verre comprend un produit de fibres de verre tissé.

7. Jante de bicyclette à moteur selon la revendication 1, où les fibres de carbone comprennent l'une des fibres de carbone de 3K et 6K et 9k et 12K.

8. Jante de bicyclette à moteur selon la revendication 5, où le renforcement de fibre de carbone comprend un produit de fibres de carbone tissé.

9. Jante de bicyclette à moteur selon la revendication 1, où la couche de résine renforcée par fibre (6) comprend une résine époxy, ayant préférablement une température de durcissement de 125 °C à 180 °C, préférablement 150 °C.

10. Jante de bicyclette à moteur selon la revendication 1, où la jante finie est couverte par une couche de vernis.

11. Procédé de fabrication la jante de bicyclette à moteur (2) selon la revendication 1, comprenant:
- fixer le matériau de renforcement de fibre de verre ou fibre de carbone à la structure de base de jante (4) en dehors de l'alliage d'aluminium,
- pourvoir une résine pré- imprégnée à la structure de base de jante (4) ayant le matériau de renforcement de fibre de verre ainsi que de fibre de carbone y fixé; et traiter la résine préimprégnée de pair avec le renforcement de fibre de verre ou de fibre de carbone, et
- utiliser un adhésif désigné pour lier le matériau pré- imprégné renforcé à la structure de base de jante (4) d'alliage d'aluminium.

12. Procédé selon la revendication 11, où le matériau pré- imprégné renforcé par fibre de verre et par fibre de carbone est fixé à la structure de base de jante par moyen d'un adhésif désigné pour lier le matériau pré- imprégné renforcé à la structure de base de jante (4) d'alliage d'aluminium.

13. Procédé selon l'une quelconque des revendications 11 et 12, où le traitement est réalisé dans un outil de moulage ou dans une autoclave.

14. Procédé selon l'une quelconque des revendications 11 à 13, où le traitement est réalisé à 125 °C à 180 °C, préférablement 150 °C, pour 30 min.

15. Procédé selon la revendication 13, comprenant de plus l'ébarbage et le polissage de la jante de bicyclette à moteur après l'éloignement de l'outil de moulage ou de l'autoclave.

16. Procédé selon la revendication 13, où la jante finie est couverte par une couche de vernis qui est appliquée à 60 °C.
